# EUROPÄISCHE PATENTSCHRIFT

(11) **EP 2 528 177 B1**
(45) Veröffentlichungstag und Bekanntmachung des Hinweises auf die Patenterteilung: **20.07.2016**
(21) Anmeldenummer: 12000695.2
(22) Anmeldetag: 02.02.2012
(51) Int. Cl.: H02B 1/044

(54) **Vorrichtung zur Montage eines Schalters oder dergleichen an einer Montageplatte**
Device for mounting a switch or similar to a mounting board
Dispositif de montage d'un commutateur ou analogue sur une plaque de montage

(30) Priorität: 17.05.2011 DE 102011101759
(43) Veröffentlichungstag der Anmeldung: 28.11.2012
(73) Patentinhaber: Schaltbau GmbH, 81829 München (DE)
(72) Erfinder: Bauer, Heinz, 84416 Taufkirchen (DE)
(74) Vertreter: Grünecker Patent- und Rechtsanwälte PartG mbB

(56) Entgegenhaltungen:
- DE-A1- 2 807 798
- DE-B3-102008 057 147
- FR-A- 1 366 038
- GB-A- 2 231 615
- JP-U- S54 104 936

## Beschreibung

Die Erfindung betrifft eine Vorrichtung zur Montage eines Schalters oder dergleichen an einer Montageplatte gemäß dem Obergebriff des unabhängigen Anspruchs 1.

Aus dem Stand der Technik ist es bekannt, einen Schalter an einer Montageplatte dadurch zu befestigen, indem beispielsweise ein mit einem Außengewinde versehener Befestigungsvorsprung des Schaltergehäuses von der Rückseite der Montageplatte in die Montageöffnung eingesetzt wird, und eine Mutter auf das Außengewinde des über die Vorderseite der Montageplatte hervorstehenden Befestigungsvorsprungs aufgeschraubt wird. Die Gehäuseoberseite des Schalters liegt dabei meist direkt an der Rückseite der Montageplatte an. Je nach Dicke der Montageplatte steht daher der Befestigungsvorsprung des Schalters unterschiedlich weit über die Vorderseite der Montageplatte hervor. Somit sind auch die meistens innerhalb des Befestigungsvorsprungs angeordneten Bedienelemente, beispielsweise ein Schalthebel, je nach Dicke der Montageplatte unterschiedlich stark von der Vorderseite der Montageplatte erhaben.

Um unterschiedliche Dicken der Montageplatte ausgleichen zu können, sind aus dem Stand der Technik auch verstellbare Gegenstützelemente bekannt, mittels derer die Gehäuseoberseite gegen die Rückseite der Montageplatte abgestützt werden kann, wobei der Abstand zwischen der Gehäuseoberseite und der Rückseite der Montageplatte eingestellt werden kann. Eine derartige Vorrichtung der eingangs genannten Art ist beispielsweise aus DE 10 2008 057 147 B3 bekannt. Zum Zwecke der Abstützung der Gehäuseoberseite gegen die Rückseite der Montageplatte umfasst diese Vorrichtung mehrere im Gehäuse sitzende Gewindestifte, die mittels Drehung aus der Gehäuseoberseite ausgefahren werden können, wodurch der gewünschte Abstand zwischen der Gehäuseoberseite und der Rückseite der Montageplatte eingestellt werden kann. Die Verstellung der Gewindestifte ist jedoch relativ aufwendig und muss mit einem Werkzeug vorgenommen werden. Auch gestaltet sich die Montage des Schalters schwierig, da vor dem Ausfahren der Gewindestifte keine Abstützung der Gehäuseoberseite gegen die Rückseite der Montageplatte gegeben ist. Der Schalter kann, sofern der Befestigungsvorsprung bereits in die Montageöffnung der Montageplatte eingesetzt ist, leicht verrutschen oder sich leicht verdrehen und muss daher in Position gehalten werden, während die Gewindestifte aus der Gehäuseoberseite ausgefahren werden. Um eine kleine unerwünschte Verdrehung des Schalters zu beseitigen, müssen die Gewindestifte nach vollständiger Montage wieder ein Stück weit eingefahren werden, was ebenfalls eine zeitaufwendige Prozedur erfordert, die nur mit einem Spezialwerkzeug durchgeführt werden kann.

Aus DE 2807798 A1 ist eine gatttungsgemäße Vorrichtung bekannt, bei der zur Abstützung eines elektrischen Bauteils gegen die Rückseite der Montageplatte eine oder mehrere Federn zum Einsatz kommen.

Aufgabe der vorliegenden Erfindung ist es, eine Vorrichtung der eingangs genannten Art anzugeben, die einen Ausgleich verschieden dicker Montageplatten erlaubt und zudem eine einfache, schnelle und werkzeuglose Montage ermöglicht.

Die Aufgabe wird gelöst durch die Merkmale des unabhängigen Anspruchs 1. Demnach liegt bei der gattungsgemäßen Vorrichtung dann eine erfindungsgemäße Lösung der Aufgabe vor, wenn es sich bei den Federn um Blattfedern handelt, die mit dem Gehäuse verbunden sind und federnd gegen die Rückseite der Montageplatte drücken, so dass zumindest eine Oberkante der Blattfeder oder ein unmittelbar an die Oberkante angrenzender Bereich einer Oberseite der Blattfeder mit der Rückseite der Montageplatte in Berührung steht, wobei die Blattfedern gegen die Rückseite der Montageplatte klappbar an dem Gehäuse angelenkt und in der ausgeklappten Stellung arretierbar sind. Dadurch kann die Federkraft nach Herstellung der Abstützung des Befestigungsvorsprungs gegen die Vorderseite der Montageplatte entweder erst hergestellt oder aber verstärkt werden. Durch das Ausklappen der Blattfedern werden diese quasi gespannt, wobei die durch die Spannung erzeugte Gegenstützkraft durch die Arretierung der Blattfedern in der ausgeklappten Stellung aufrechterhalten werden kann. Bei einem entsprechenden Federweg kann die Gehäuseoberseite auch bei verschieden großen Abständen zwischen Gehäuseoberseite und Rückseite der Montageplatte optimal gegen die Rückseite der Montageplatte abgestützt werden. Eine Verstellung der Federn ist nicht erforderlich, wodurch auch die aufwendige Einstellung mittels Spezialwerkzeug entfällt. Durch die Erfindung wird eine sehr kostengünstige und einfach herzustellende Art der Abstützung erreicht.

Vorteilhafte Ausgestaltungen der vorliegenden Erfindung sind Gegenstand der Unteransprüche.

Jede Blattfeder verläuft vorzugsweise ausgehend von einer Kante der Gehäuseoberseite schräg nach oben in Richtung der Rückseite der Montageplatte, und zwar vorzugsweise ausgehend von der Kante der Gehäuseoberseite nach innen in Richtung eines mittig von der Gehäuseoberseite ausgehenden Befestigungsvorsprungs. Dadurch wird zum einen eine stabile Abstützung des Schalters erreicht, zum anderen wird unter der Montageplatte kein zusätzlicher Bauraum um das Schaltergehäuse herum benötigt.

In einer weiteren ganz besonders bevorzugten Ausführungsform der vorliegenden Erfindung sind die Blattfedern jeweils fest mit einer Klammer verbunden, die einen Mittelteil und zwei an gegenüberliegenden Seiten des Mittelteils abstehende Seitenteile umfasst, wobei die Klammer um eine Drehachse im Bereich der Gehäuseoberseite drehbar an dem Gehäuse angelenkt ist, und wobei die Klammer eine Seite des Gehäuses in der ausgeklappten Stellung der Blattfeder umklammert, wobei ein erstes Rastelement jedes Seitenteils in dieser Stellung in ein entsprechendes zweites Rastelement des Gehäuses einrastet. Diese Ausführungsform stellt eine sehr einfache Möglichkeit der Arretierbarkeit der Blattfedern in der ausgeklappten Stellung dar. Die Klammern können von Hand und ohne Spezialwerkzeug um die Drehachse im Bereich der Gehäuseoberseite nach unten geklappt werden, so dass das Mittelteil der Klammer an der umklammerten Seite des Gehäuses anliegt und die Rastelemente der beiden Seitenteile in die Rastelemente des Gehäuses einrasten. Dabei wird die mit der Klammer verbundene Blattfeder nach oben in Richtung der Rückseite der Montageplatte geklappt bzw. gegen diese Rückseite gespannt.

Vorzugsweise ist das erste Rastelement eine Ausnehmung in dem jeweiligen Seitenteil, und das zweite Rastelement ein in die Ausnehmung passender Vorsprung des Gehäuses. Dies ermöglicht eine einfache und kostengünstige Fertigung. Die Ausnehmung in dem jeweiligen Seitenteil kann ganz einfach aus dem Seitenteil ausgestanzt werden. Besonders bevorzugt handelt es sich bei dem Vorsprung des Gehäuses um einen per Schraubenzieher in das Gehäuse ein- bzw. ausfahrbaren Knopf. Dadurch kann die eingerastete Stellung der Klammer, die der ausgeklappten Stellung der Blattfeder entspricht, auf einfache Art und Weise gelöst werden, indem der ein- bzw. ausfahrbare Knopf mittels Schraubenzieher in das Gehäuse eingedreht wird.

Ferner besonders bevorzugt weist jedes Seitenteil ein drittes Rastelement auf, dass in ein entsprechendes viertes Rastelement des Gehäuses einrastbar ist, wobei die drehbare Anlenkung der Klammer durch eine drehbare Lagerung des dritten Rastelements in dem vierten Rastelement erreicht wird. Die Klammer kann dadurch sozusagen in zwei, an gegenüberliegenden Seiten des Gehäuses im Bereich der Gehäuseoberseite angeordnete Rastelemente eingeklickt werden und ist dadurch bereits drehbar um eine Achse im Bereich der Gehäuseoberseite am Gehäuse gelagert. Dies bedeutet eine sehr einfache Montage der Klammer am Gehäuse.

Besonders bevorzugt handelt es sich bei dem dritten Rastelement um eine runde Ausnehmung in dem jeweiligen Seitenteil der Klammer, wobei das vierte Rastelement jeweils ein runder Vorsprung des Gehäuses ist. Auch dadurch wird eine kostengünstige Herstellung der Klammer erreicht, indem die runde Ausnehmung, die das dritte Rastelement des jeweiligen Seitenteils darstellt, einfach aus dem Seitenteil der Klammer ausgestanzt werden kann.

Besonders bevorzugt handelt es sich bei dem vierten Rastelement um den Kopf einer Gehäuseschraube. Dadurch können die ohnehin am Gehäuse befindlichen Gehäuseschrauben als Rastelemente genutzt werden, wodurch eine kostengünstige Herstellung der Vorrichtung erreicht wird. Zusätzliche Rastelemente zur drehbaren Lagerung der Klammer müssen am Gehäuse nicht vorgesehen werden.

In einer weiteren bevorzugten Ausführungsform der vorliegenden Erfindung sind Blattfeder und Klammer in einem Stück aus einem Federstahlblech ausgestanzt. Die Klammer und die damit fest verbundene Blattfeder können somit auf kostengünstige Art und Weise sowie äußerst schnell hergestellt werden.

In einer weiteren bevorzugten Ausführungsform weist die Blattfeder an der Oberkante eine mittige Aussparung auf. Dadurch wird gewährleistet, dass die Ecken der Oberkante der Blattfeder in jedem Fall an der Rückseite der Montageplatte anliegen, wodurch eine parallele Ausrichtung des Schaltergehäuses zur Montageplatte gewährleistet wird.

Um einen verbesserten Halt der Oberkante der Blattfeder an der Rückseite der Montageplatte zu gewährleisten und dadurch ein unerwünschtes Verdrehen des Schalters zu verhindern, kann die Oberkante der Blattfeder oder ein unmittelbar an die Oberkante angrenzender Bereich der Oberseite der Blattfeder in einer weiteren Ausführungsform der vorliegenden Erfindung gummiert sein. Vorzugsweise ist die gesamte der Montageplatte zugewandte Oberseite der Blattfeder gummiert. Alternativ dazu können auch die Ecken der Oberkante in Richtung der Rückseite der Montageplatte aufbogen sein. Die aufgebogenen Ecken bilden somit jeweils einen Stützdorn, der gegen die Rückseite der Montageplatte gepresst wird und somit die Haftreibung zwischen der Blattfeder und der Rückseite der Montageplatte erhöht.

In einer weiteren besonders bevorzugten Ausführungsform der vorliegenden Erfindung sind genau zwei Blattfedern an gegenüberliegenden Seiten des Gehäuses vorgesehen. Dadurch wird eine einfache parallele Ausrichtung des Schaltergehäuses zur Rückseite der Montageplatte erzielt.

Ausführungsbeispiele der vorliegenden Erfindung werden im Folgenden anhand von Zeichnungen näher erläutert.

Es zeigen:
- **Fig. 1:**: eine Schrägansicht eines an einer Montageplatte montierten Schalters gemäß einem ersten Ausführungsbeispiel der vorliegenden Erfindung,
- **Fig. 2:**: eine Vorderansicht des Schalters aus Fig. 1 im unarretierten Zustand der zur Abstützung gegen die Rückseite der Montageplatte verwendeten Blattfedern,
- **Fig. 3:**: eine Schrägansicht einer Blattfeder mit Befestigungsklammer gemäß den Fig. 1 und 2,
- **Fig. 4:**: eine Seitenansicht der Blattfeder aus Fig. 3,
- **Fig. 5:**: eine weitere Schrägansicht der Blattfeder aus den Fig. 3 und 4,
- **Fig. 6:**: eine Seitenansicht des Schalters aus Fig. 1,
- **Fig. 7:**: eine Vorderansicht des Schalters aus Fig. 1 mit arretierten Blattfedern,
- **Fig. 8:**: eine Schrägansicht einer alternativen Blattfeder gemäß einem zweiten Ausführungsbeispiel der vorliegenden Erfindung,
- **Fig. 9:**: eine Seitenansicht der Blattfeder aus Fig. 8,
- **Fig. 10:**: eine weitere Schrägansicht der Blattfeder aus den Fig. 8 und 9, sowie
- **Fig. 11:**: eine Vorderansicht eines Schalters gemäß dem zweiten Ausführungsbeispiel.

Für die weiteren Ausführungen gilt, dass gleiche Teile mit gleichen Bezugszeichen bezeichnet sind.

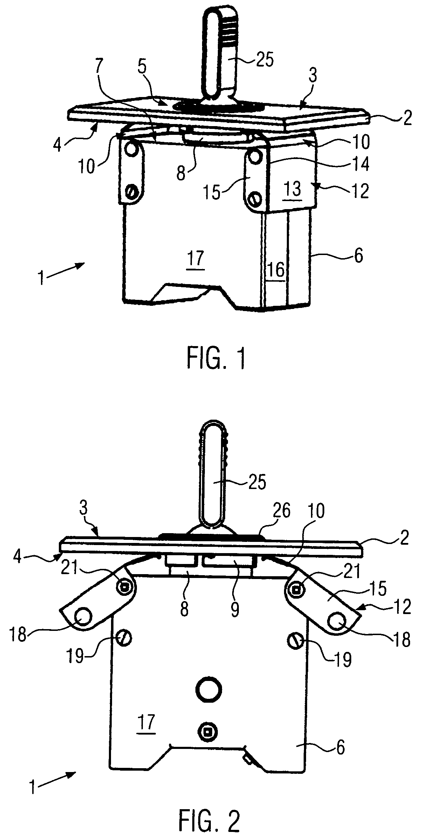

Fig. 1 zeigt einen Schalter 1, der mit Hilfe einer Vorrichtung gemäß einem ersten Ausführungsbeispiel der vorliegenden Erfindung an einer Montageplatte 2 montiert ist. Die Fig. 1, 2, 6 und 7 zeigen den Schalter jeweils in unterschiedlichen Ansichten, wobei der Schalter in den Fig. 1, 6 und 7 im fertig montierten Zustand dargestellt ist.

Der Schalter 1 umfasst ein Gehäuse 6 mit zwei jeweils gegenüberliegenden Schmalseiten 16 und zwei ebenfalls gegenüberliegende Breitseiten 17. An der Gehäuseoberseite 7 ist ein Befestigungsvorsprung 8 ausgebildet, der von unten, also von der Rückseite 4 einer Montageplatte 2 in eine Montageöffnung 5 der Montageplatte 2 eingesetzt ist. Auf den Befestigungsvorsprung 8 ist von oben, also von der Vorderseite 3 der Montageplatte 2 ein Befestigungsring 9, der in Fig. 2 dargestellt ist, nach Art eines Bajonettverschlusses aufgesetzt. Der Befestigungsring 9 weist am oberen Ende einen Zierring 26 auf, der den Befestigungsvorsprung 8 und damit das gesamte Gehäuse 6 gegen die Vorderseite 3 der Montageplatte 2 abstützt. Der Zierring 26 sorgt zudem für ein ästhetisches Erscheinungsbild auf der Vorderseite der Montageplatte. Innerhalb des Zierrings 26 ist ein im Befestigungsvorsprung 8 gelagerter Bedienhebel 25 des Schalters angeordnet.

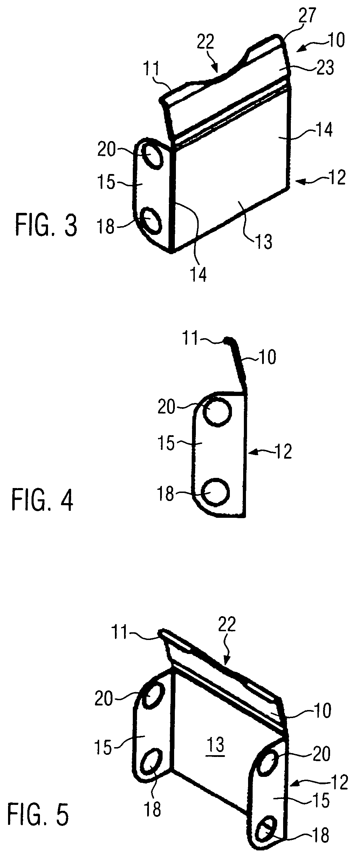

Zwischen der Gehäuseoberseite 7 des Schaltergehäuses 6 und der Rückseite 4 der Montageplatte 2 besteht ein gewisser Abstand, um den Schalter 1 auch an dickeren Montageplatten montieren zu können. Aufgrund des Abstands der Gehäuseoberseite 7 zur Montageplatte muss die Gehäuseoberseite gegen die Rückseite 4 der Montageplatte abgestützt werden. Hierzu dienen erfindungsgemäß zwei Blattfedern 10, die in den Fig. 3 bis 5 näher dargestellt sind. Jede Blattfeder 10 ist einstückig mit einer Befestigungsklammer 12 ausgeführt. Jede Klammer 12 besteht aus einem Mittelteil 13, an dessen gegenüberliegenden Seiten 14 jeweils ein Seitenteil 15 anschließt, das unter etwa 90° von dem Mittelteil 13 absteht. Im fertig montierten Zustand umschließt jede der beiden Befestigungsklammern 12 jeweils einen oberen Bereich einer der beiden Schmalseiten 16 des Gehäuses 6. Das Mitteteil 13 ist im fertig montierten Zustand, dargestellt in den Fig. 1, 6 und 7, parallel zur entsprechenden Schmalseite 16 des Gehäuses ausgerichtet, wobei die beiden Seitenteile 15 an jeweils einer Breitseite 17 des Gehäuses anliegen.

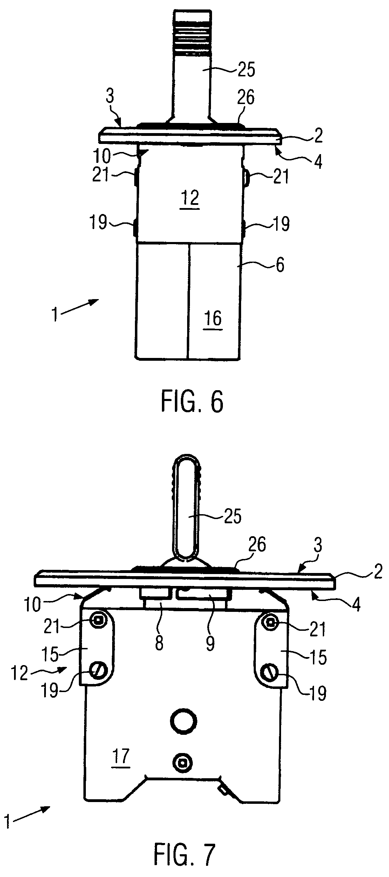

Die in den Fig. 3 bis 5 dargestellte Blattfeder 10 weist eine Oberkante 11 auf, wobei in der Blattfeder an der Oberkante 11 eine mittige Aussparung 22 vorgesehen ist. Ferner ist ein an die Oberkante 11 angrenzender oberer Bereich der Blattfeder entlang eines Falzes 27 leicht nach unten abgeknickt. Die gesamte Oberseite 23 der Blattfeder 10 ist gummiert. In Fig. 7 kann man erkennen, dass die Blattfeder 10 im fertig montierten Zustand gegen die Rückseite 4 der Montageplatte geklappt und gegen die Rückseite gespannt ist, so dass ein an die Oberkante 11 angrenzender Bereich der Oberseite 23 an der Rückseite 4 der Montageplatte anliegt. Die Gummierung sorgt dafür, dass die gegen die Rückseite 4 der Montageplatte 2 gespannte Feder nicht verrutschen kann. Die mittige Ausnehmung 22 der Blattfeder, die in den Fig. 3 und 5 dargestellt ist, sorgt dafür, dass die Blattfeder jeweils mit einem äußeren Bereich der Oberseite 23 an der Montageplatte 2 anliegt. Dadurch wird eine parallele Ausrichtung des Schalters 1 an der Montageplatte 2 gewährleistet.

Ebenfalls in den Fig. 3 bis 5 ist zu erkennen, dass jedes Seitenteil 15 der Befestigungsklammer 12 zwei ausgestanzte kreisrunde Ausnehmungen aufweist. Mit den beiden oberen Ausnehmungen 20 kann die Befestigungsklammer 12 in zwei von den beiden Breitseiten 17 des Gehäuses 6 abstehende Rastelemente 21, am besten dargestellt in Fig. 6, eingeklickt werden. Die beiden Rastelemente 21 werden von einer bzw. zwei Gehäuseschrauben gebildet, die zwei Hälften des Gehäuses 6 im Bereich der Gehäuseoberseite zusammenhalten. Aufgrund der kreisrunden Ausnehmungen 20 können die beiden Befestigungsklammern 12 um eine Drehachse gedreht werden, die durch die beiden gehäuseseitigen Rastelemente 21 gebildet wird. Da jeweils eine Blattfeder mit zugehöriger Befestigungsklammer in einem Stück aus einem Federstahlblech ausgestanzt ist, bewirkt eine Drehung der in Fig. 2 dargestellten Befestigungsklammern 12 nach unten, dass die mit den Befestigungsklammern 12 verbundenen Blattfedern 10 gegen die Rückseite 4 der Montageplatte geklappt und in weiterer Folge gegen die Rückseite 4 gespannt werden. Die maximal mögliche Federspannung ist erreicht, wenn die beiden Befestigungsklammern, so wie in den Fig. 1, 6 und 7 dargestellt, vollständig nach unten an jeweils eine Schmalseite 16 des Gehäuses 6 geklappt sind. In dieser Stellung werden die Befestigungsklammern 12 arretiert, indem eine jeweils weitere kreisrunde Ausnehmung der beiden Seitenteile 15, nämlich die in den Fig. 3 bis 5 dargestellte untere Ausnehmung 18, in ein entsprechendes Rastelement 19 des Gehäuses 6 einrastet. Die Rastelemente 19 stehen, wie in Fig. 6 gezeigt, ebenfalls von den beiden Breitseiten 17 des Gehäuses 6 ab und werden jeweils durch einen runden Knopf gebildet, der per Schraubenzieher in das Gehäuse ein- bzw. ausgefahren werden kann. Sämtliche Rastelemente 19 und 21 des Gehäuses weisen eine kleine Fase auf, wodurch das Einklicken bzw. Einrasten der Befestigungsklammern 12 begünstigt wird.

Zur Montage des Schalters 1 wird der Befestigungsvorsprung 8, wie oben bereits ausgeführt, zunächst in die Montageöffnung 5 der Montageplatte 2 eingesetzt, worauf der Befestigungsring 9 oder ein anderes adäquates Befestigungsmittel zur Abstützung des Befestigungsvorsprungs gegen die Vorderseite 2 der Montageplatte an dem Befestigungsvorsprung 8 arretiert wird. Bis zu diesem Zeitpunkt sind die beiden Blattfedern 10 nicht gegen die Rückseite 4 der Montageplatte 2 gespannt. Die Befestigungsklammern 12 stehen demnach bis zu diesem Zeitpunkt schräg vom Gehäuse 6 des Schalters ab, so wie es in Fig. 2 dargestellt ist. Im Anschluss daran erfolgt die vollständige Arretierung des Schalters 1 an der Montageplatte 2 durch Herunterklappen der beiden Befestigungsklammern 12, bis die kreisrunden Ausnehmungen 18 jeweils in ein Rastelement 19 des Schaltergehäuses 6 einrasten. Dadurch werden die Blattfedern 10 gegen die Rückseite 4 der Montageplatte gespannt, wodurch eine selbständige Ausrichtung der Gehäuseoberseite 7 parallel zur Montageplatte 2 erfolgt. Der Schalter 1 kann somit auf einfache Art und Weise ohne Spezialwerkzeug an der Montageplatte ausgerichtet und montiert werden. Um die Vorspannung der Blattfedern 10 zu lösen, können die als ein- bzw. ausfahrbare Knöpfe ausgebildeten Rastelemente 19 mit einem herkömmlichen Schraubenzieher in das Gehäuse 6 des Schalters eingefahren werden. Dadurch wird die Arretierung der beiden Befestigungsklammern 12 an den Rastelementen 19 gelöst, wodurch gleichzeitig die Blattfedern 10 entspannt werden.

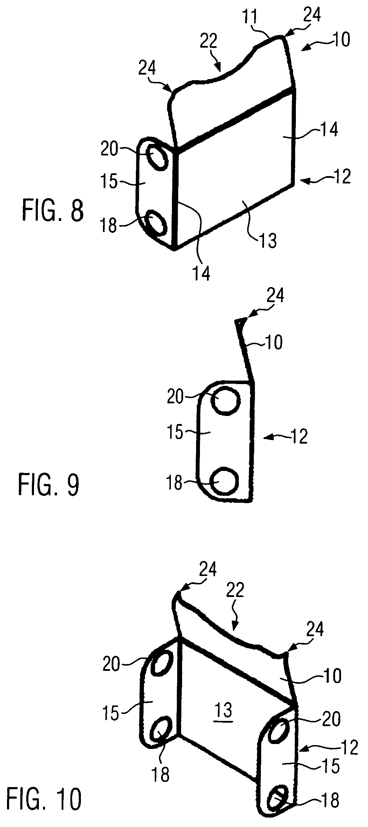

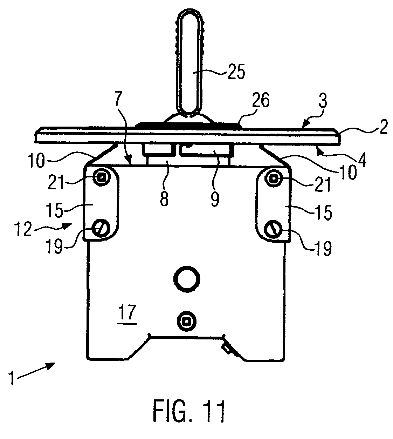

In den Fig. 8 bis 10 ist eine alternative Ausführungsform der beiden Blattfedern 10 dargestellt. Die Blattfedern sind bei diesem Ausführungsbeispiel nicht gummiert, sondern es sind die äußeren Ecken 24 der Oberkante 11 aufgebogen, so dass diese aufgebogenen Ecken 24 im fertig montierten Zustand, dargestellt in Fig. 11, gegen die Rückseite 4 der Montageplatte 2 gerichtet sind. Durch die aufgebogenen Ecken 24 wird die Haftreibung zwischen der Oberkante 11 der Blattfedern 10 und der Unterseite 4 der Montageplatte 2 erhöht. Ganz besonders eignet sich diese Ausführungsform, falls die Montageplatte zumindest unten aus einem weicheren Material besteht als die Blattfedern 10, so dass sich die aufgebogenen Ecken 24 leicht in die Rückseite 4 der Montageplatte 2 eindrücken. Dadurch kann eine unerwünschte Verdrehung des Schalters vermieden werden.

Es wird ausdrücklich darauf hingewiesen, dass sich die Erfindung nicht nur zur Montage eines Schalters, sondern auch zur Montage ähnlicher elektronischer Bauteile eignet.

## Patentansprüche

1. Vorrichtung zur Montage eines Schalters (1) oder dergleichen an einer Montageplatte (2) mit einer Vorderseite (3), einer Rückseite (4) sowie einer Montageöffnung (5), wobei der Schalter (1) ein Gehäuse (6) mit einer Gehäuseoberseite (7) und zumindest einem Befestigungsvorsprung (8) umfasst, welcher von der Rückseite (4) der Montageplatte (2) in die Montageöffnung (5) einsetzbar ist, wobei ferner Mittel (9) zur Abstützung des Befestigungsvorsprungs (8) gegen die Vorderseite (3) der Montageplatte (2) vorgesehen sind, und wobei die Vorrichtung Gegenstützelemente zur Abstützung der Gehäuseoberseite (7) gegen die Rückseite (4) der Montageplatte (2) umfasst, wobei die Gegenstützelemente durch Federn gebildet sind, **dadurch gekennzeichnet, dass** die Federn Blattfedern (10) sind, die mit dem Gehäuse (6) verbunden sind und federnd gegen die Rückseite (4) der Montageplatte (2) drücken, so dass zumindest eine Oberkante (11) der Blattfeder (10) oder zumindest ein unmittelbar an die Oberkante (11) angrenzender Bereich einer Oberseite (23) der Blattfeder (10) mit der Rückseite (4) der Montageplatte (2) in Berührung steht, wobei die Blattfedern gegen die Rückseite der Montageplatte klappbar an dem Gehäuse angelenkt und in der ausgeklappten Stellung arretierbar sind.

2. Vorrichtung nach Anspruch 1, **dadurch gekennzeichnet, dass** die Blattfedern (10) jeweils fest mit einer Klammer (12) verbunden sind, wobei die Klammer (12) einen Mittelteil (13) und zwei an gegenüberliegenden Seiten (14) des Mittelteils (13) abstehende Seitenteile (15) umfasst, wobei die Klammer (12) ferner um eine Drehachse im Bereich der Gehäuseoberseite (7) drehbar an dem Gehäuse (6) angelenkt ist, und wobei die Klammer (12) eine Seite (16) des Gehäuses (6) in der ausgeklappten Stellung der Blattfeder (10) umklammert, wobei ein erstes Rastelement (18) jedes Seitenteils (15) in dieser Stellung in ein entsprechendes zweites Rastelement (19) des Gehäuses (6) einrastet.

3. Vorrichtung nach Anspruch 2, **dadurch gekennzeichnet, dass** das erste Rastelement (18) eine Ausnehmung in dem jeweiligen Seitenteil (15), und das zweite Rastelement (19) ein in die Ausnehmung passender Vorsprung des Gehäuses (6) ist.

4. Vorrichtung nach Anspruch 3, **dadurch gekennzeichnet, dass** der Vorsprung ein per Schraubenzieher in das Gehäuse (6) ein- bzw. ausfahrbarer Knopf ist.

5. Vorrichtung nach einem der Ansprüche 2 bis 4, **dadurch gekennzeichnet, dass** jedes Seitenteil (15) ein drittes Rastelement (20) aufweist, das in ein entsprechendes viertes Rastelement (21) des Gehäuses (6) einrastbar ist, wobei die drehbare Anlenkung der Klammer (12) durch eine drehbare Lagerung des dritten Rastelements (20) in dem vierten Rastelement (21) erreicht wird.

6. Vorrichtung nach Anspruch 5, **dadurch gekennzeichnet, dass** das dritte Rastelement (20) eine runde Ausnehmung in dem jeweiligen Seitenteil (15), und das vierte Rastelement (21) ein runder Vorsprung des Gehäuses (6) ist.

7. Vorrichtung nach Anspruch 6, **dadurch gekennzeichnet, dass** das vierte Rastelement (21) der Kopf einer Gehäuseschraube ist.

8. Vorrichtung nach einem der Ansprüche 2 bis 7, **dadurch gekennzeichnet, dass** Blattfeder (10) und Klammer (12) in einem Stück aus einem Federstahlblech ausgestanzt sind.

9. Vorrichtung nach einem der Ansprüche 1 bis 8, **dadurch gekennzeichnet, dass** die Blattfeder (10) an der Oberkante (11) eine mittige Aussparung (22) aufweist.

10. Vorrichtung nach einem der Ansprüche 1 bis 9, **dadurch gekennzeichnet, dass** zumindest die Oberkante (11) der Blattfeder (10) oder zumindest ein unmittelbar an die Oberkante (11) angrenzender Bereich der Oberseite (23) der Blattfeder (10) gummiert ist.

11. Vorrichtung nach einem der Ansprüche 1 bis 10, **dadurch gekennzeichnet, dass** die äußeren Ecken (24) der Oberkante (11) in Richtung der Rückseite (4) der Montageplatte (2) aufgebogen sind.

12. Vorrichtung nach einem der Ansprüche 1 bis 11, **dadurch gekennzeichnet, dass** genau zwei Blattfedern (10) an gegenüberliegenden Seiten (16) des Gehäuses (6) vorgesehen sind.

## Claims

1. Device for mounting a switch (1) or the like on a mounting plate (2) having a front side (3), a back side (4) as well as a mounting hole (5), wherein the switch (1) comprises a housing (6) with a housing upper side (7) and at least one fixing projection (8) insertable into the mounting hole (5) from the back side (4) of the mounting plate (2), wherein furthermore means (9) to support the fixing projection (8) against the front side (3) of the mounting plate (2) are provided, and wherein the device comprises counter-supporting elements to support the housing upper side (7) against the back side (4) of the mounting plate (2), wherein the counter-supporting elements are formed by springs, **characterized in that** the springs are leaf springs (10), which are connected to the housing (6) and resiliently press against the back side (4) of the mounting plate (2), so that at least an upper edge (11) of the leaf spring (10) or at least a section of an upper side (23) of the leaf spring (10) directly adjacent to the upper edge (11) is in contact with the back side (4) of the mounting plate (2), wherein the leaf springs are hinged to the housing to be foldable against the back side of the mounting plate, and are lockable in the unfolded position.

2. Device according to claim 1, **characterized in that** the leaf springs (10) are each permanently connected to a clamp (12), the clamp (12) comprising a central part (13) and two side parts (15) projecting on opposite sides (14) of the central part (13), wherein the clamp (12) is furthermore rotatably hinged to the housing (6) about a rotation axis in the region of the housing upper side (7), and wherein the clamp (12) embraces one side (16) of the housing (6) in the unfolded position of the leaf spring (10), wherein a first detent member (18) of each side part (15) engages in this position a corresponding second detent member (19) of the housing (6).

3. Device according to claim 2, **characterized in that** the first detent member (18) is a cut-out in the respective side part (15), and the second detent member (19) is a projection of the housing (6) fitting into the cut-out.

4. Device according to claim 3, **characterized in that** the projection is a button which can be moved into and out of the housing (6) by a screwdriver.

5. Device according to one of claims 2 to 4, **characterized in that** each side part (15) comprises a third detent member (20) which is engageable with a corresponding fourth detent member (21) of the housing (6), wherein the rotatable articulation of the clamp (12) is achieved by rotatably mounting the third detent member (20) in the fourth detent member (21).

6. Device according to claim 5, **characterized in that** the third detent member (20) is a round cut-out in the respective side part (15), and the fourth detent member (21) is a round projection of the housing (6).

7. Device according to claim 6, **characterized in that** the fourth detent member (21) is the head of a housing screw.

8. Device according to one of claims 2 to 7, **characterized in that** the leaf spring (10) and the clamp (12) are punched out of a spring steel sheet in one piece.

9. Device according to one of claims 1 to 8, **characterized in that** the leaf spring (10) has a central recess (22) on the upper edge (11).

10. Device according to one of claims 1 to 9, **characterized in that** at least the upper edge (11) of the leaf spring (10), or at least a section of the upper side (11) of the leaf spring (10) directly adjacent to the upper edge (11) is rubberized.

11. Device according to one of claims 1 to 10, **characterized in that** the outer corners (24) of the upper edge (11) are bent up towards the back side (4) of the mounting plate (2).

12. Device according to one of claims 1 to 11, **characterized in that** exactly two leaf springs (10) are provided on opposite sides (16) of the housing (6).

## Revendications

1. Dispositif pour le montage d'un commutateur ou interrupteur (1) ou élément analogue sur une plaque de montage (2) comportant un côté avant (3), un côté arrière (4) ainsi qu'une ouverture de montage (5), dispositif
dans lequel le commutateur (1) comprend un boitier (6) avec un côté supérieur de boitier (7) et au moins une proéminence de fixation (8), qui peut être insérée par le côté arrière (4) de la plaque de montage (2) dans l'ouverture de montage (5),
dans lequel sont par ailleurs prévus des moyens (9) destinés à assurer l'appui de la proéminence de fixation (8) contre le côté avant (3) de la plaque de montage (2), et
dans lequel sont prévus des éléments d'appui conjugués destinés à assurer l'appui du côté supérieur de boitier (7) contre le côté arrière (4) de la plaque de montage (2), les éléments d'appui conjugués étant formés par des ressorts,
**caractérisé en ce que** les ressorts sont des ressorts à lame (10), qui sont reliés au boitier (6) et appuient de manière élastique contre le côté arrière (4) de la plaque de montage (2), de façon à ce qu'au moins un bord supérieur (11) du ressort à lame (10) ou au moins une zone d'un côté supérieur (23) du ressort à lame (10) directement adjacente au bord supérieur (11), soit en contact avec le côté arrière (4) de la plaque de montage (2), et **en ce que** les ressorts à lame sont articulés sur le boitier de manière à pouvoir être basculés contre le côté arrière de la plaque de montage, et peuvent être bloqués dans la position déployée.

2. Dispositif selon la revendication 1, **caractérisé en ce que** les ressorts à lame (10) sont reliés chacun de manière fixe à une bride (12), **en ce que** la bride (12) comprend une partie centrale (13) et deux parties latérales (15) faisant saillie sur deux côtés opposés (14) de la partie centrale (13), **en ce que** la bride (12) est par ailleurs articulée au boitier (6), autour d'un axe de rotation, dans la zone du côté supérieur de boitier (7), et **en ce que** la bride (12) enserre un côté (16) du boitier (6) dans la position déployée du ressort à lame (10), un premier élément d'encliquetage (18) de chaque partie latérale (15) venant s'encliqueter, dans cette position, dans un deuxième élément d'encliquetage (19) correspondant du boitier (6).

3. Dispositif selon la revendication 2, **caractérisé en ce que** le premier élément d'encliquetage (18) est un évidement dans la partie latérale (15) respective, et le deuxième élément d'encliquetage (19) est une protubérance du boitier (6), adaptée à l'évidement.

4. Dispositif selon la revendication 3, **caractérisé en ce que** la protubérance est un bouton pouvant être enfoncé dans le boitier ou extrait du boitier (6) à l'aide d'un tournevis.

5. Dispositif selon l'une des revendications 2 à 4,
**caractérisé en ce que** chaque partie latérale (15) présente un troisième élément d'encliquetage (20), qui peut être encliqueté dans un quatrième élément d'encliquetage (21) correspondant du boitier (6), l'articulation rotative de la bride (12) étant obtenue par un montage rotatif du troisième élément d'encliquetage (20) dans le quatrième élément d'encliquetage (21).

6. Dispositif selon la revendication 5, **caractérisé en ce que** le troisième élément d'encliquetage (20) est un évidement rond dans la partie latérale (15) respective, et le quatrième élément d'encliquetage (21) est une protubérance ronde du boitier (6).

7. Dispositif selon la revendication 6, **caractérisé en ce que** le quatrième élément d'encliquetage (21) est la tête d'une vis du boitier.

8. Dispositif selon l'une des revendications 2 à 7,
**caractérisé en ce que** le ressort à lame (10) et la bride (12) sont découpés à l'emporte-pièce, d'un seul tenant, dans une tôle d'acier à ressort.

9. Dispositif selon l'une des revendications 1 à 8,
**caractérisé en ce que** le ressort à lame (10) présente, sur le bord supérieur (11), une encoche centrale (22).

10. Dispositif selon l'une des revendications 1 à 9, **caractérisé en ce qu'**au moins le bord supérieur (11) du ressort à lame (10) ou au moins une zone d'un côté supérieur (23) du ressort à lame (10) directement adjacente au bord supérieur (11), sont caoutchoutés.

11. Dispositif selon l'une des revendications 1 à 10, **caractérisé en ce que** les coins extérieurs (24) du bord supérieur (11) sont coudés en direction du côté arrière (4) de la plaque de montage (2).

12. Dispositif selon l'une des revendications 1 à 11, **caractérisé en ce que** sont prévus exactement deux ressorts à lame (10) sur des côtés (16) mutuellement opposés du boitier (6).
